(19) **Europäisches Patentamt / European Patent Office / Office européen des brevets**

(11) **EP 1 179 379 B1**

(12) **EUROPEAN PATENT SPECIFICATION**

(45) Date of publication and mention
of the grant of the patent:
**01.04.2009 Bulletin 2009/14**

(51) Int Cl.:
*B23H 9/14* (2006.01)   *B23H 9/00* (2006.01)
*C25F 3/16* (2006.01)   *B23H 9/16* (2006.01)
*F02M 61/16* (2006.01)

(21) Application number: **01202561.5**

(22) Date of filing: **04.07.2001**

(54) **Electrochemical machining of orificies**

Verfahren zur elektrochemischen Bearbeitung von Kanälen

Méthode d'usinage électrochimique d'orifices

(84) Designated Contracting States:
**DE ES FR IT**

(30) Priority: **09.08.2000 GB 0019463**

(43) Date of publication of application:
**13.02.2002 Bulletin 2002/07**

(73) Proprietor: **Delphi Technologies, Inc.**
**Troy, MI 48007 (US)**

(72) Inventor: **Heinzel, Udo**
**17000 La Rochelle (FR)**

(74) Representative: **Denton, Michael John et al**
**Delphi European Headquarters**
**64 avenue de la Plaine de France**
**BP 65059 Tremblay-en-France**
**95972 Roissy Charles de Gaulle Cedex (FR)**

(56) References cited:
**EP-A- 0 457 975      EP-A- 0 802 009**
**US-A- 5 539 648      US-A- 5 865 977**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to electrochemical machining of orifices or microbores in a metallic workpiece.

Background of the Invention

It is known to form small diameter orifices or microbores in a metallic workpiece by electrodischarge machining (EDM). For certain applications (for example, an adapter plate of a fuel injector) the orifice or microbore may have first and second portions with different diameters, with a shoulder (usually tapered) connecting the two portions. However, the EDM process leaves a sharp edge at the join between the shoulder and the small diameter portion, and a roughened surface on the shoulder and the surface of the small diameter portion. This type of finish can have a detrimental or inconsistent effect on fluid flow through the orifice. A paste process has been used to try to round the sharp edge and smooth the surfaces in order to increase fluid flow rate. However, such a paste process produces inconsistent flow rate results and does not lend itself to an automated production line.

EP-A-0441887 describes an electrochemical machining (ECM) process in which an electrochemical fluid is pumped by a mechanical pump at a constant pressure through an orifice in a metallic workpiece, the flow resistance of the electrochemical fluid is measured, and pumping is stopped when the measured flow resistance reaches a predetermined value. EP-A-0787057 discloses in combination the features of the preamble of claims 1 and 11 and describes an ECM process for assembling test data for use in subsequent production runs, in which electrochemical fluid at 100 bar is passed through an orifice in a metallic workpiece, volume flow and pressure are measured and temporarily stored, the workpiece is calibrated to determine actual flow rate through the orifice, the actual flow rate is compared to a desired flow rate, the process is continued until actual and desired flow rates correspond, and the stored values are then permanently stored for subsequent processing of metallic workpieces. EP-A-0457975 describes an ECM process for forming an arcuate taper at one end of an orifice in a metallic workpiece in which electrochemical fluid is passed through the orifice, an electrode is positioned in the orifice, the electrode having an insulating cover except for the portion adjacent the one end of the orifice, and the electrical supply to the electrode is adjusted in response to the flow rate of the electrochemical fluid. Whilst these known ECM processes are used to produce orifices which have a more consistent flow rate, they still do not lend themselves to an automated production line.

Summary of the Invention

It is an object of the present invention to overcome the above mentioned problem.

A method of electrochemically machining an orifice in a metallic workpiece in accordance with the present invention is characterised by the steps specified in Claim 1.

The present invention provides an ECM process which is usable for an automated production line as orifice calibration and electrochemical machining can be performed at the same workstation.

The present invention also includes apparatus for carrying out the method as specified in claim 11.

Brief Description of the Drawings

The present invention will now be described, by way of example, with reference to the accompanying drawings, in which:-

Figure 1 is a cross-sectional view of the metallic workpiece prior to the use of a method in accordance with the present invention, with the electrode in position;

Figure 2 is a cross-sectional view of the workpiece of Figure 1 after the use of the method of the present invention;

Figure 3 is a schematic view of apparatus in accordance with the present invention for performing the method in accordance with the present invention;

Figure 4 is a schematic view of alternative apparatus in accordance with the present invention for performing the method in accordance with the present invention; and

Figure 5 is a schematic view of a modification of the apparatus of Figure 3 or 4.

Description of the Preferred Embodiment

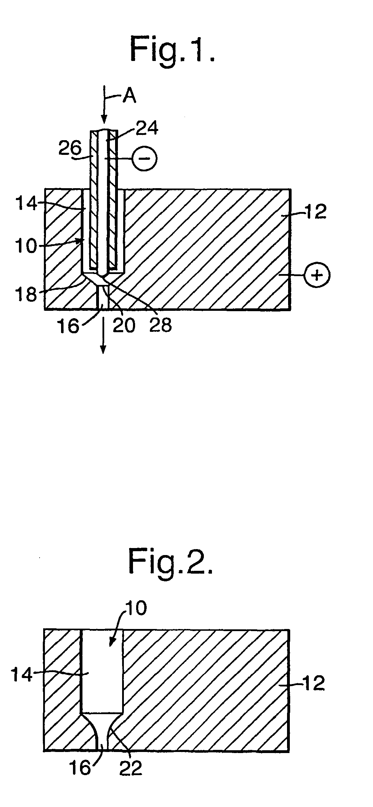

Referring to Figure 1, the method of the present invention is for the electrochemical machining of an orifice or microbore 10 in a metallic workpiece 12. The orifice 10 has a first portion 14 which has a greater diameter than a second portion 16. The first and second portions 14, 16 of the orifice 10 are connected by a shoulder 18. The orifice 10 is preformed by any suitable process, such as electrodischarge machining (EDM). As can be seen from Figure 1, a sharp edge 20 is formed between the shoulder 18 and the second portion 16 of the orifice 10. Also, the preforming of the orifice 10 produces a rough surface finish. The present invention has the aim of changing the sharp edge to a curved (or arcuate) shape 22 (as shown in Figure 2) with a smooth surface, and also smoothing the surface of the second portion 16 of the orifice 10. Such changes produce an orifice 10 with an increased rate of fluid flow through the orifice, and with reduced risk of turbulence in the fluid.

During the method of the present invention, an electrode 24 is inserted into the first portion 14 of the orifice 10 in the direction A. The electrode 24 has an electrically insulating cover 26 except for the portion 28 positioned adjacent the shoulder 18 and edge 20. Electrolyte fluid is passed through the orifice 10 (also in the direction A), and an electric current is passed through the electrode 24, electrolyte fluid, and workpiece 12 to electrochemically machine the shoulder 18 and edge 20 to form the curved shape 22, and to smooth the surface of the curved shape and the surface of the second portion 16 of the orifice 10.

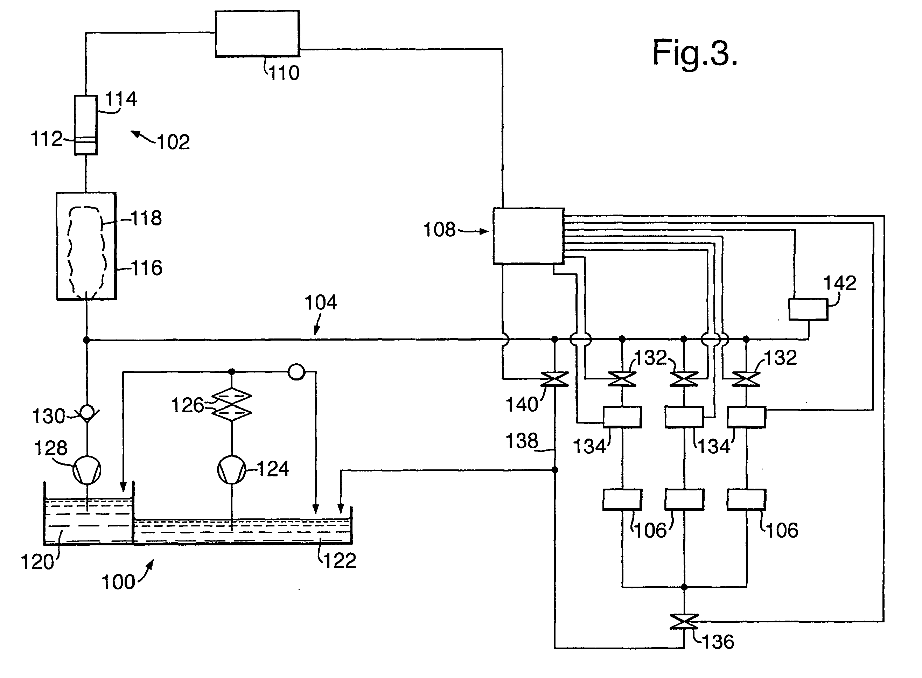

Figure 3 illustrates schematically apparatus 100 for use in carrying out the method of the present invention, and in particular for controlling the flow of, and the pressure of, the electrolyte fluid. The apparatus 100 includes a hydraulic fluid system 102, an electrolyte fluid system 104, three workstations 106, and a control unit 108.

The hydraulic fluid system 102 includes a hydraulic fluid unit 110 which includes a pump and solenoid controlled valve. The unit 110 supplies pressurised hydraulic fluid to one side of a piston 112 in a first accumulator 114. The other side of the piston 112 supplies pressurised hydraulic fluid to a second accumulator 116. An elastomeric bladder 118 is located inside the second accumulator 116. The pressurised hydraulic fluid acts on the outer surface of the bladder 118.

Each workstation 106 is capable of receiving and positioning a workpiece 12. Each workstation 106 also includes means (not shown) for inserting and removing the electrode 24 from the first portion 14 of the orifice 10 in the workpiece 12.

The electrolyte fluid system 104 comprises first and second reservoirs 120, 122. The second reservoir 122 receives electrolyte fluid which has passed through the orifice 10 in each workpiece 12 at each workstation 106. A first pump 124 pumps electrolyte fluid from the second reservoir 122 through a series of filters 126 and into the first reservoir 120. A second pump 128 pumps electrolyte fluid from the first reservoir 120 through a one-way valve 130 into the bladder 118 in the second accumulator 116. The arrangement of the bladder 118 is such as to fluidly prevent the hydraulic fluid and the electrolyte fluid from coming into direct contact, but such as to exert the pressure of the hydraulic fluid onto the electrolyte fluid. Each workstation 106 is fluidly connected with the bladder 118 by a control valve 132, and by a sensor 134, which is capable of monitoring the rate of flow of electrolyte fluid. Pressurised electrolyte fluid from the bladder 118 therefore passes through the control valve 132 and sensor 134 to enter the first portion 14 of the orifice 10 in the direction A when the workpiece 12 is positioned at the workstation 106. The electrolyte fluid leaving the second portion 16 of the orifice 10 passes through a control valve 136 and flows into the second reservoir 122. A bypass line 138 with a control valve 140 can allow electrolyte fluid to pass directly from the bladder 118 into the second reservoir 122, bypassing the workstations 106. A pressure sensor 142 monitors the pressure of the electrolyte fluid entering the orifices 10 in each workpiece 12.

The control unit 108 is a microprocessor based system. The control unit 108 is electrically connected to the control valves 132, 136, 140 and controls the operation thereof. The control unit 108 is also electrically connected to the means (not shown) for inserting and removing the electrodes 24 from the orifices 10 in the workpieces 12 to control the movement of the electrodes, and also controls the pulse width of the electrical current which passes through the electrode, electrolyte fluid and workpiece 12. The control unit 108 receives signals from each flow rate sensor 134.

The apparatus 100 is operated as follows. The second pump 128 is operated to pump electrolyte fluid into the bladder 118. The hydraulic fluid unit 110 is actuated to generate hydraulic fluid pressure in the second accumulator 116. The pressure sensor 142 monitors the pressure of the electrolyte fluid and controls the operation of the hydraulic fluid unit 110 (either directly or through the control unit 108) to maintain a substantially constant predetermined pressure for the electrolyte fluid entering the orifices 10. As an example, for an electrolyte fluid pressure of 100 bar, the hydraulic fluid is substantially maintained at a pressure of 160 bar.

A workpiece 12 is positioned at each workstation 106. The control unit 108 opens the control valves 132, 136 to allow electrolyte fluid to flow through each flow rate sensor 134 and the orifice 10 in each workpiece 12. The control unit 108 monitors the signal from each flow rate sensor 134 and determines the rate of flow of electrolyte fluid through the orifice 10 in each workpiece 12. The control unit 108 then compares each measured flow rate with a predetermined target flow rate for each orifice 10 to determine the difference between each measured value and the target value. From a look-up table stored in a memory in the control unit 108, the control unit determines a pulse width for the electrical current based on each determined difference between the measured flow rate and the target flow rate. The control unit 108 then inserts the electrodes 24 in each orifice 10 and allows electrical current to flow through each electrode, the electrolyte fluid, and each workpiece 12, for the determined period of time. At the end of this step, the control unit 108 removes the electrodes 24 from each orifice 10.

The control unit 108 then repeats the steps of measuring flow rate and comparing the newly measured value to the target value. If the measured flow rate has not reached the target value, a new pulse width is determined by the control unit 108, the electrodes are inserted in the orifices 10 again, an electrical current is allowed to flow for the newly determined time period, and then the electrodes are removed from the orifices. These steps are repeated until the measured flow rate through each orifice 10 is substantially the same as the target flow rate for each orifice. During this process, the pressure of the electrolyte fluid entering the orifices 10 is maintained substantially constant.

When the control unit 108 has determined that the measured flow rate through each orifice 10 is substantially the same as the target flow rate for each orifice, the control unit 108 closes the valves 132, 136, and opens the bypass control valve 140 to release the pressure of the electrolyte fluid.

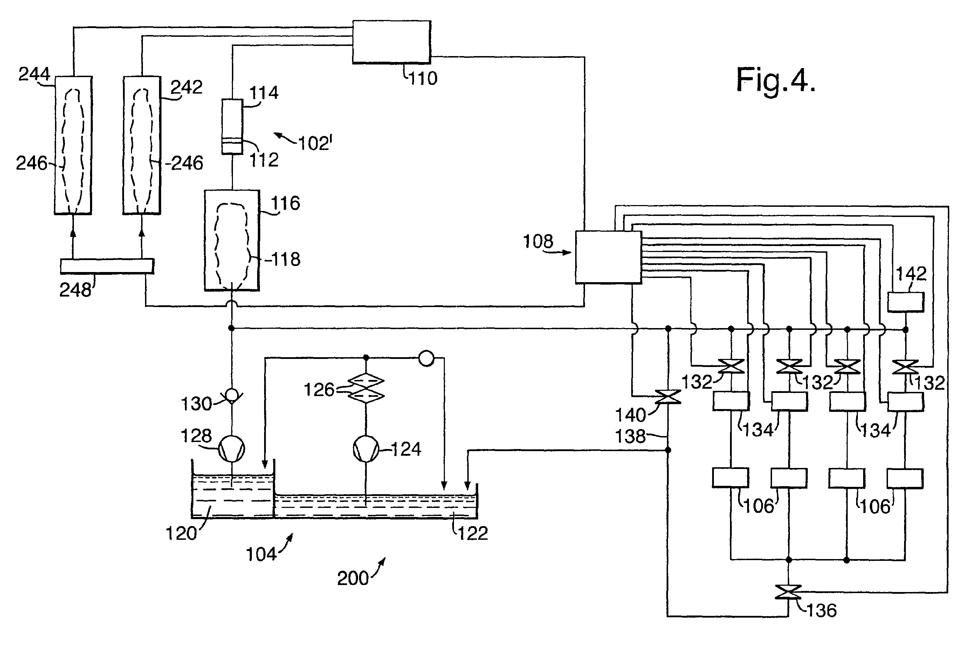

Figure 4 illustrates schematically a modification to the apparatus shown in Figure 3, and like parts have the same reference numeral. The apparatus 200 of Figure 4 has four workstations 106. However, the main difference over the apparatus 100 of Figure 3 is the control of the pressure of the hydraulic fluid in the hydraulic fluid system 102'. The hydraulic fluid system 102' includes substantially identical third and fourth accumulators 242, 244. Elastomeric bladders 246 are located inside the third and fourth accumulators 242, 244. Hydraulic fluid is fed between the hydraulic fluid unit 110 and the third and fourth accumulators 242, 244 and acts on the outer surface of the bladders 246. The inside of each bladder 246 receives pressurised nitrogen (or any other suitable gas) from any suitable source 248.

At the start of use of the apparatus 200, the pump and solenoid valve in the hydraulic fluid unit 110 are actuated to generated pressure in the hydraulic fluid, and the pump is then switched off. The pressure in the hydraulic fluid is then controlled and maintained (to maintain a substantially constant predetermined pressure in the electrolyte fluid entering the orifices 10) by the use of the solenoid valve and the alternate use of the third and fourth accumulators 242, 244. The actuation of the solenoid valve is controlled by the pressure sensor 142 either directly or by way of the control unit 108. In this arrangement, the pressurised nitrogen in the bladder 246 of the active accumulator 242, 244 acts on the hydraulic fluid to maintain the pressure of the hydraulic fluid in the first accumulator 114 at a level which ensures that the pressure of the electrolyte fluid remains substantially constant and at the required value. The solenoid valve switches the fluid connection between the first accumulator 114 and the third or the fourth accumulator 242, 244 to maintain the pressure of the electrolyte fluid entering the orifices 10 at a substantially constant value. As an example, for an electrolyte fluid pressure of 100 bar, the hydraulic fluid pressure initially generated by the pump of the hydraulic fluid unit 110 may be of the order of 200 to 260 bar, and the nitrogen is pressurised at approximately 145 bar.

The other steps in the operation of the apparatus 200 are substantially the same as that described above for the apparatus 100 of Figure 3. The use of the accumulators 242 and 244 to control the hydraulic fluid pressure (rather than the pump) reduces the risk of the generation of pulses in the hydraulic fluid, and hence in the electrolyte fluid.

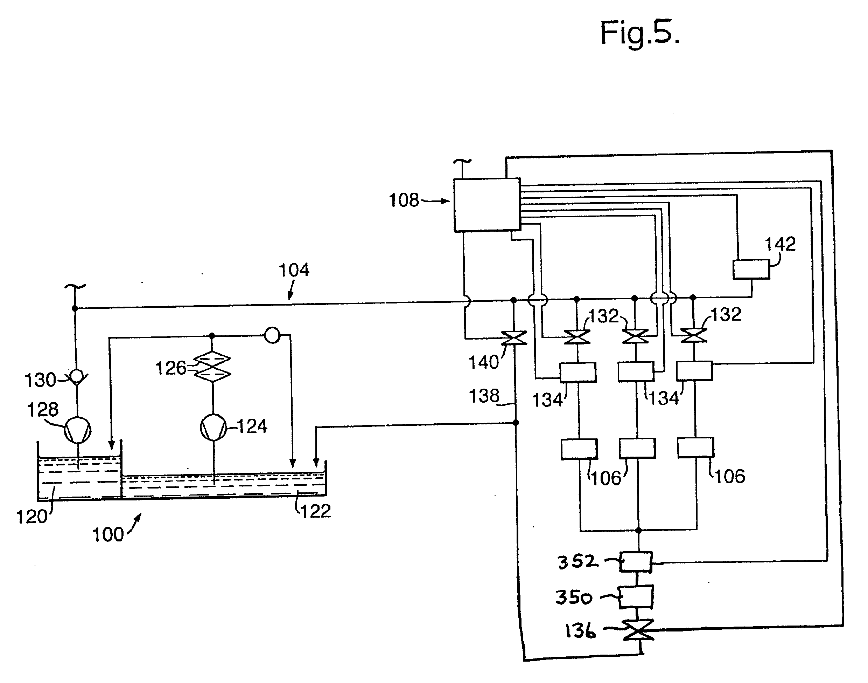

Figure 5 illustrates a modification which is applicable to either the apparatus 100 of Figure 3 or the apparatus 200 of Figure 4. In this modification, a pressure regulator 350 is positioned downstream of the workstations 106 between the workstations and the control valve 136, and a second pressure sensor 352 is positioned between the pressure regulator and the workstations. The pressure regulator 350 is set to provide a predetermined pressure in the electrolyte fluid leaving the orifices 10, which pressure is measured by the second pressure sensor 352. The predetermined downstream fluid pressure is set to provide a substantially fixed cavitation number for the orifices 10 in each workpiece 12

$$Cn = \frac{Pin - Pout}{Pout}$$

where

| | |
|---|---|
| Cn = | cavitation number; |
| Pin = | pressure measured by the sensor 142; and |
| Pout = | pressure measured by the second sensor 352; |

during the flow rate measurements. The second pressure sensor 352 measures the pressure of the electrolyte fluid leaving the workpieces 12 and controls the operation of the hydraulic fluid unit 110 (either directly or through the control unit 108) to provide the required cavitation number for the orifices 10. This arrangement has particular use where a cavitation number of one or less is required for the orifice 10.

The apparatus 100 of Figure 3, or the apparatus 200 of Figure 4, or the modification of Figure 5, may be arranged such that the process performed at one workstation 106 is for one size of orifice 10 in a workpiece 12, whereas the process performed at the adjacent workstation is for an orifice having a different dimension.

In the above described arrangements, the pressure of the electrolyte fluid entering the orifices 10 is maintained substantially constant during the electrochemical machining of the orifices and during the calibration of the orifices, and the flow rate is the variable parameter which is used during the calibration. The flow rate is preferably mass flow rate. In an alternative arrangement, the flow rate may be volume flow rate.

In an alternative arrangement, the flow rate of the electrolyte fluid through the orifices may be maintained substantially constant, and the pressure of the electrolyte fluid entering and/or leaving the orifices 10 may be monitored for changes and used as the variable parameter. In the latter case, the above described arrangements would need to be adapted by replacing/repositioning the flow rate sensors and the pressure sensor or sensors.

In the above described arrangements, the electrode 24 is removed from the orifice 10 during the measurement of the variable parameter. In an alternative arrangement, the electrode may remain in position in the orifice during the measurement of the variable parameter, and only removed on completion of the process.

The present invention provides a process by which an orifice 10 in metallic workpieces 12 can be consistently and accurately formed, and in which the electrochemical machining of the orifices, and the calibration of the orifices, can be performed at a single workstation 106. Such an arrangement lends itself to an automated production line.

The present invention can be used for the electrochemical machining of the orifices in an adapter plate of a fuel injector where the first and second portions of each orifice are substantially axially aligned. The present may also be used for the electrochemical machining of the orifice in a fuel injector nozzle where the first portion and the second portion of the orifice may be at an angle to one another. As example of dimensions, the first portion of the orifice may have a diameter of approximately 1.6 mm, and the diameter of the second portion may be in the range 0.5 to 0.2 mm.

**Claims**

1. A method of electrochemically machining an orifice (10) in a metallic workpiece (12) comprising the steps of:

    (a) positioning the workpiece at a workstation (106), the workpiece having the orifice therethrough, the orifice having a first portion (14), a second portion (16), and an edge (20) therebetween, the first portion having a greater diameter than the second portion;
    (b) passing electrolyte fluid through the orifice, the electrolyte fluid having the parameters of pressure and flow rate, one of the parameters being maintained substantially constant and the other parameter being variable;
    (c) measuring (134) an initial value of the variable parameter of the electrolyte fluid as the fluid passes through the orifice;
    (d) determining (108) the difference between the measured value of the variable parameter and a target value for the variable parameter;
    (e) inserting an electrode (24) in the first portion of the orifice until a portion (28) thereof is positioned adjacent the edge, the electrode having an insulating cover (26) except at the portion adjacent the edge;
    **characterised by**
    (f) passing an electrical current through the electrode, the electrolyte fluid, and the workpiece for a predetermined period dependent on the determined difference between the measured value and the target value;
    (g) measuring (134) the new value of the variable parameter of the electrolyte fluid as the fluid passes through the orifice;
    (h) determining (108) the difference between the measured new value of the variable parameter and the target value for the variable parameter; and
    (i) repeating steps (f), (g), and (h) until the measured value and the target value are substantially the same.

2. A method as claimed in Claim 1, further comprising the steps of removing the electrode (24) from the orifice (10) prior to step (g); and repeating step (e) prior to step (i).

3. A method as claimed in Claim 1 or Claim 2, wherein the variable parameter is the rate of flow of electrolyte fluid, and the substantially constant parameter is pressure.

4. A method as claimed in Claim 3, wherein the variable parameter is the rate of mass flow of electrolyte fluid.

5. A method as claimed in Claim 3 or Claim 4, further comprising the step of maintaining a substantially constant predetermined pressure differential in the electrolyte fluid across the orifice (10).

6. A method as claimed in any one of Claims 3 to 5, wherein the substantially constant pressure of the electrolyte fluid is monitored (142); and wherein the substantially constant pressure is maintained by filling a bladder (118) with the electrolyte fluid and applying (102) pressurised hydraulic fluid to the outer surface of the bladder, the pressure of the hydraulic fluid being dependent on the monitored electrolyte fluid pressure.

7. A method as claimed in Claim 6, wherein the hydraulic fluid is pressurised by a pump (110).

8. A method as claimed in Claim 6, wherein the hydraulic fluid is initially pressurised by a pump (110); and then maintained pressurised by pressurised gas in second and third bladders (246), the second and third bladders acting on the hydraulic fluid.

9. A method as claimed in Claim 8, wherein the hydraulic fluid is maintained pressurised by alternate use of the second and third bladders (246).

10. A method as claimed in Claim 8 or Claim 9, wherein the gas is nitrogen.

11. Apparatus (100) for electrochemically machining an orifice (10) in a metallic workpiece (12) comprising a workstation (106) for receiving the workpiece; an electrolyte fluid system (104) for passing electrolyte fluid through the orifice in the workpiece; a hydraulic fluid system (102) for generating fluid pressure in the electrolyte fluid; flow sensing means (134) for measuring the rate of flow of electrolyte fluid through the orifice; pressure sensing means (142) for measuring the pressure of the electrolyte fluid; an electrode (24) movable into and out of the orifice in the workpiece; **characterised by** control means (108, 134, 142) for controlling the operation of the electrolyte fluid system, hydraulic fluid system, and electrode, in accordance with the method as claimed in any one of Claims 1 to 10.

## Patentansprüche

1. Verfahren zum elektrochemischen Abtragen einer Öffnung (10) in einem metallischen Werkstück (12), das die Schritte aufweist:

   (a) Positionieren des Werkstücks an einer Bearbeitungsstation (106), wobei das Werkstück die Öffnung hindurch hat, wobei die Öffnung einen ersten Teil (14), einen zweiten Teil (16) und einen Rand bzw. eine Kante (20) dazwischen hat, wobei der erste Teil einen größeren Durchmesser hat als der zweite Teil;
   (b) Leiten von Elektrolytfluid durch die Öffnung, wobei das Elektrolytfluid die Parameter Druck und Fließgeschwindigkeit hat, wobei einer der Parameter im Wesentlichen konstant gehalten wird und der andere Parameter variabel ist;
   (c) Messen (134) eines anfänglichen Werts des variablen Parameters des Elektrolytfluids, wenn das Fluid durch die Öffnung fließt;
   (d) Feststellen (108) der Differenz zwischen dem gemessenen Wert des variablen Parameters und einem Sollwert für den variablen Parameter;
   (e) Einführen einer Elektrode (24) in den ersten Teil der Öffnung, bis ein Teil (28) davon angrenzend an die Kante positioniert ist, wobei die Elektrode eine isolierende Umhüllung (26) hat, außer an dem Teil angrenzend an die Kante;
   **gekennzeichnet durch**:
   (f) Leiten eines elektrischen Stroms **durch** die Elektrode, das Elektrolytfluid und das Werkstück für eine vorgegebene Zeitdauer abhängig von der festgestellten Differenz zwischen dem gemessenen Wert und dem Sollwert;
   (g) Messen (134) des neuen Werts des variablen Parameters des Elektrolytfluids, wenn das Fluid **durch** die Öffnung fließt;
   (h) Feststellen (108) der Differenz zwischen dem gemessenen neuen Wert des variablen Parameters und dem Sollwert für den variablen Parameter; und
   (i) Wiederholen der Schritte (f), (g) und (h), bis der gemessene Wert und der Sollwert im Wesentlichen gleich sind.

2. Verfahren gemäß Anspruch 1, das weiter aufweist die Schritte eines Entfernens der Elektrode (24) aus der Öffnung (10) vor dem Schritt (g); und Wiederholen des Schritts (e) vor dem Schritt (i).

3. Verfahren gemäß Anspruch 1 oder Anspruch 2, wobei der variable Parameter der Durchfluss des Elektrolytfluids ist und der im Wesentlichen konstante Parameter der Druck ist.

4. Verfahren gemäß Anspruch 3, wobei der variable Parameter der Mengendurchfluss des Elektrolytfluids ist.

5. Verfahren gemäß Anspruch 3 oder Anspruch 4, das weiter aufweist den Schritt des Beibehaltens eines im Wesentlichen konstanten vorgegebenen Druckunterschieds in dem Elektrolytfluid über der Öffnung (10).

6. Verfahren gemäß einem der Ansprüche 3 bis 5, wobei der im Wesentliche konstante Druck des Elektrolytfluids überwacht wird (142); und wobei der im Wesentliche konstante Druck gehalten wird durch Füllen einer Blase (118) mit dem Elektrolytfluid und Anwenden (102) eines unter Druck gesetzten Hydraulikfluids auf die äußere Oberfläche der Blase, wobei der Druck des Hydraulikfluids von dem überwachten Elektrolytfluiddruck abhängig ist.

7. Verfahren gemäß Anspruch 6, wobei das Hydraulikfluid durch eine Pumpe (110) unter Druck gesetzt wird.

8. Verfahren gemäß Anspruch 6, wobei das Hydraulikfluid anfangs durch eine Pumpe (110) unter Druck gesetzt wird; und dann unter Druck gehalten wird durch ein unter Druck gesetztes Gas in zweiten und dritten Blasen (246), wobei die zweiten und dritten Blasen auf das Hydraulikfluid wirken.

9. Verfahren gemäß Anspruch 8, wobei das Hydraulikfluid unter Druck gehalten wird durch alternierende Verwendung der zweiten und dritten Blasen (246).

10. Verfahren gemäß Anspruch 8 oder Anspruch 9, wobei das Gas Stickstoff ist.

11. Vorrichtung (100) zum elektrochemischen Abtragen einer Öffnung (10) in einem metallischen Werkstück (12), die aufweist eine Bearbeitungsstation (106) zum Aufnehmen des Werkstücks; ein Elektrolytfluidsystem (104) zum Leiten von Elektrolytfluid durch die Öffnung in dem Werkstück; ein Hydraulikfluidsystem (102) zum Erzeugen eines Fluiddrucks in dem Elektrolytfluid; Fließerfassungsmittel (134) zum Messen des Durchflusses des Elektrolytfluids durch die Öffnung; Druckerfassungsmittel (142) zum Messen des Drucks des Elektrolytfluids; eine Elektrode (24), die in die Öffnung in dem Werkstück hinein und heraus bewegt werden kann; **gekennzeichnet durch** Steuerungsmittel (108, 134, 142) zum Steuern der Operation des Elektrolytfluidsystems, des Hydraulikfluidsystems und der Elektrode in Übereinstimmung mit dem Verfahren gemäß einem der Ansprüche 1 bis 10.

**Revendications**

1. Procédé pour usiner par voie électrochimique un orifice (10) dans une pièce à oeuvrer métallique (12), comprenant les étapes consistant à :

   (a) positionner la pièce à oeuvrer à un poste de travail (106), la pièce à oeuvrer présentant l'orifice à travers elle-même, l'orifice ayant une première portion (14), une seconde portion (16) et une arête (20) entre elles, la première portion ayant un diamètre supérieur à la seconde portion ;
   (b) faire passer un fluide électrolyte à travers l'orifice, le fluide électrolyte présentant comme paramètres la pression et le débit, l'un des paramètres étant maintenu sensiblement constant et l'autre paramètre étant variable ;
   (c) mesurer (134) une valeur initiale du paramètre variable du fluide électrolyte tandis que le fluide passe à travers l'orifice ;
   (d) déterminer (108) la différence entre la valeur mesurée du paramètre variable et une valeur cible pour le paramètre variable ;
   (e) insérer une électrode (24) dans la première portion de l'orifice jusqu'à ce qu'une portion (28) de celle-ci soit positionnée adjacente à l'arête, l'électrode ayant une couverture isolante (26) à l'exception de la portion adjacente à l'arête ;
   **caractérisé par** les étapes consistant à :
   (f) faire passer un courant électrique à travers l'électrode, le fluide électrolyte, et la pièce à oeuvrer pendant une période prédéterminée, en dépendance de la différence déterminée entre la valeur mesurée et la valeur cible ;
   (g) mesurer (134) la nouvelle valeur du paramètre variable du fluide électrolyte tandis que le fluide passe à travers l'orifice ;
   (h) déterminer (108) la différence entre la nouvelle valeur mesurée du paramètre variable et la valeur cible pour le paramètre variable ; et
   (i) répéter les étapes (f), (g) et (h) jusqu'à ce que la valeur mesurée et la valeur cible soient sensiblement les mêmes.

2. Procédé selon la revendication 1, comprenant en outre les étapes consistant à enlever l'électrode (24) hors de l'orifice (10) avant l'étape (g) ; et à répéter l'étape (e) avant l'étape (i).

3. Procédé selon la revendication 1 ou 2, dans lequel le paramètre variable est le débit du fluide électrolyte, et le paramètre sensiblement constant est la pression.

4. Procédé selon la revendication 3, dans lequel le paramètre variable est le débit massique du fluide électrolyte.

5. Procédé selon la revendication 3 ou 4, comprenant en outre l'étape consistant à maintenir une pression différentielle prédéterminée sensiblement constante dans le fluide électrolyte à travers l'orifice (10).

6. Procédé selon l'une quelconque des revendications 3 à 5, dans lequel la pression sensiblement constante du fluide électrolyte est surveillée (142) ; et dans lequel la pression sensiblement constante est maintenue en remplissant une poche souple (118) avec le fluide électrolyte et en appliquant (102) un fluide hydraulique sous pression sur la surface extérieure de la poche souple, la pression du fluide hydraulique dépendant de la pression surveillée du fluide électrolyte.

7. Procédé selon la revendication 6, dans lequel le fluide hydraulique est mis sous pression par une pompe (110).

8. Procédé selon la revendication 6, dans lequel le fluide hydraulique est mis initialement sous pression par une pompe (110) ; et celui-ci est alors maintenu sous pression par un gaz sous pression dans une seconde et une troisième poche souple (246), la seconde et la troisième poche souple agissant sur le fluide hydraulique.

9. Procédé selon la revendication 8, dans lequel le fluide hydraulique est maintenu sous pression en utilisant alternativement la seconde et la troisième poche souple (246).

10. Procédé selon la revendication 8 ou 9, dans lequel le gaz est de l'azote.

11. Appareil (100) pour usiner par voie électrochimique un orifice (10) dans une pièce à oeuvrer métallique (12), comprenant un poste de travail (106) pour recevoir la pièce à oeuvrer ; un système à fluide électrolyte (104) pour faire passer un fluide électrolyte à travers l'orifice dans la pièce à oeuvrer ; un système à fluide hydraulique (102) pour générer une pression dans le fluide électrolyte ; des moyens de détection de débit (34) pour mesurer le débit du fluide électrolyte à travers l'orifice ; des moyens de détection de pression (142) pour mesurer la pression du fluide électrolyte ; une électrode (24) mobile en entrant et en sortant de l'orifice dans la pièce à oeuvrer ; **caractérisé par** des moyens de commande (108, 134, 142) pour commander le fonctionnement du système à fluide électrolyte, du système à fluide hydraulique, et de l'électrode, en accord avec le procédé revendiqué selon l'une quelconque des revendications 1 à 10.

# Fig.1.

# Fig.2.

Fig.3.

EP 1 179 379 B1

Fig. 4.

Fig.5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0441887 A
- EP 0787057 A
- EP 0457975 A